# EUROPEAN PATENT APPLICATION

(11) **EP 2 080 992 A1**
(43) Date of publication of application: **22.07.2009**
(21) Application number: 07831573.6
(22) Date of filing: 09.11.2007
(51) Int. Cl.: G01D 5/20, B62D 5/04, G01B 7/30, B62D 1/04

(54) **ROTATION ANGLE DETERMINING APPARATUS**

(30) Priority: 10.11.2006 JP 2006305903
(71) Applicant: The Furukawa Electric Co., Ltd., Chiyoda-ku Tokyo 100-8322 (JP)
(72) Inventor: SAITO, Shinya, Chiyoda-ku Tokyo 100-8322 (JP); HORI, Shinji, Chiyoda-ku Tokyo 100-8322 (JP); TORATANI, Tomoaki, Chiyoda-ku Tokyo 100-8322 (JP)
(74) Representative: Reinhard - Skuhra - Weise & Partner GbR
(86) International application number: PCT/JP2007/071842
(87) International publication number: WO 2008/056792

(57) **Abstract**

A rotation angle detection apparatus has angle detection means that has detection circuits each including a detection element part having a coil and a resistor and that also has inductance changing means that changes the inductance of the coil in accordance with the rotation of a rotation measurement target. The rotation angle detection apparatus further has reference pulse voltage generating means for causing the detection circuits to generate output signals; and calculating means for calculating the output signals of the detection circuits. The calculating means obtains an integral by integrating, for a predetermined time, a transient output voltage occurring when a reference pulse voltage generated by the reference pulse voltage generating means is input to the detection circuits. The calculating means then detects, based on the integral, a rotation angle of the rotation measurement target, whereby the number of components of the rotation angle detection apparatus can be reduced and error factors of the output signal of the detection circuits can be reduced. As a result, the logic circuits and amplifier circuits can be simplified and hence the cost of the rotation angle detection apparatus can be reduced.

## Description

### Technical Field

The present invention relates to a rotation angle detection apparatus which is appropriately mounted on a rotating body for detecting a rotation angle of the rotating body.

### Background Art

A rotation angle detection apparatus is used, for example, as mounted on a rotation shaft such as a steering shaft of an automobile to detect a rotation angle of a steering wheel handle integrally provided with the shaft.

As an example of such a rotation angle detection apparatus, there is an apparatus having a rotor and a fixed core arranged facing the rotor with a predetermined distance away therefrom (for example, see the patent document 1).

This rotation angle detection apparatus has, as shown in the patent document 1, the rotor mounted on a rotating shaft, the fixed core having a core main body of insulating magnetic material and at least one exciting coil held in the core main body; and a rotation angle detection part. Here, the at least one exciting coil has two exciting coils, which are arranged forming a predetermined center angle, such as 90 degrees, between them in the circumferential direction of the rotor. Besides, the fixed core is mounted on a fixing member positioned in the vicinity of the shaft and they are held, together with the rotor, in a case of insulating magnetic material or metal having shielding of an AC magnetic field.

The rotor has a rotor mounting part of insulating magnetic material and a rotor shieldmember which is connected to the rotor mounting part via a support part and has a width varying continuously along the circumferential direction. Here, the rotor shield member is made of a metal having conductivity and has a narrow part having a minimum width and a wide part having a maximum width and positioned to the radially opposite side. The radial width or length of the rotor shield member is configured varying depending on the rotation angle of the rotor and AC magnetic field is used to induce eddy current of magnitude corresponding to the width of the rotation. Then, the thus-structured rotation angle detection apparatus is used to detect the rotation angle of the rotor with use of variation of the impedance of the exciting coil caused by the eddy current.
[Patent Document 1] Japanese Patent Laid-open Publication No. 2003-202240 (pages 4-5, Fig. 1)

### Disclosure of Invention

### Problems to be Solved by the Invention

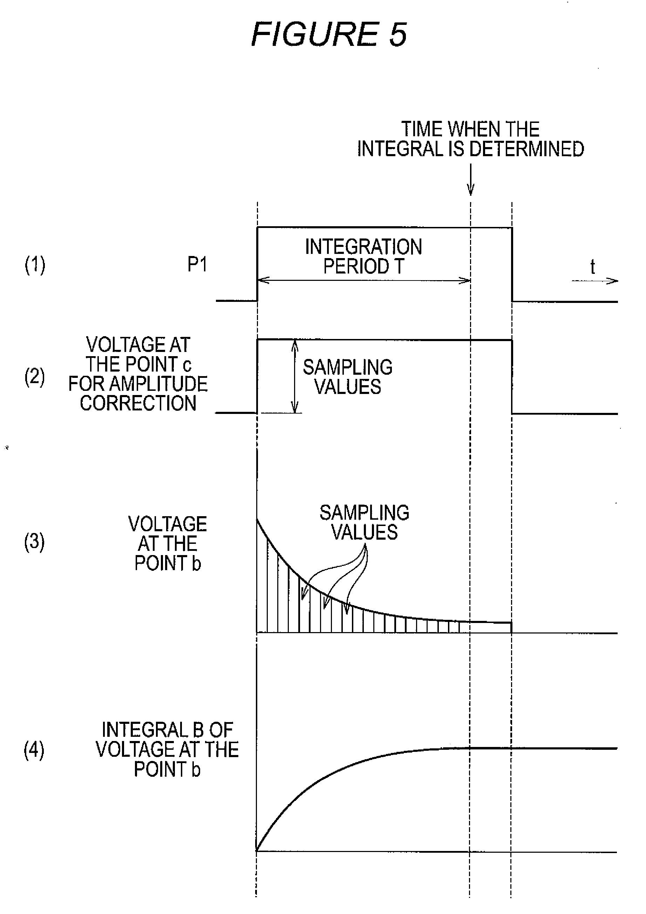

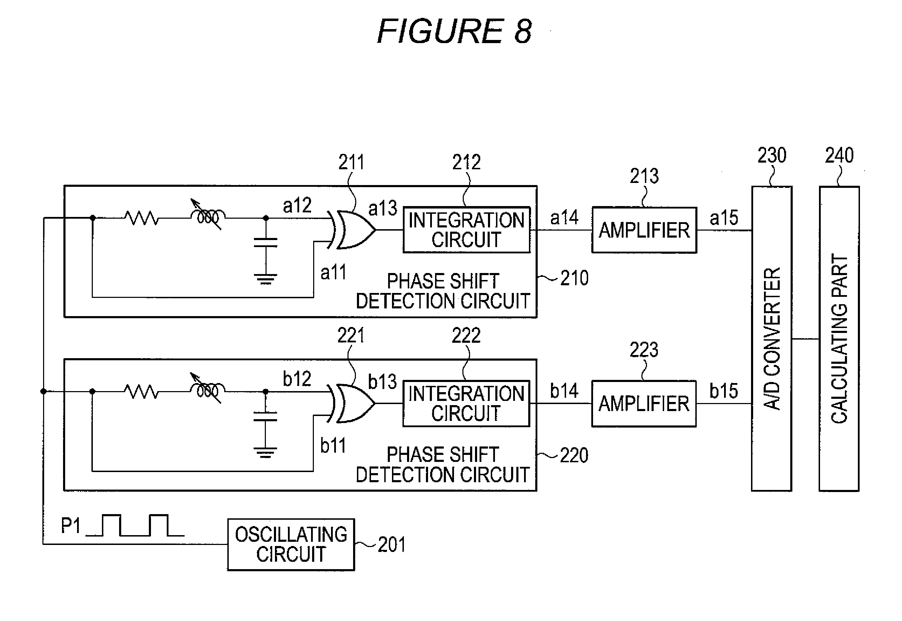

The conventional method for detecting an angle by a rotation angle detection apparatus according to the related art of the present invention will now be described below with reference to Fig. 8. The circuitry block diagram thereof has almost the same structure shown in Fig. 5 of the patent document 1 (Japanese Patent Laid-open Publication No. 2003-202240).

Specifically, in this circuitry block diagram, an oscillating circuit 201 shown in the lower part of Fig. 8 generates a rectangular reference pulse voltage P1. The reference pulse voltage P1 generated by the oscillating circuit 201 is supplied to two phase shift detection circuits 210, 220 and used as a reference signal for position detection.

As shown in Fig. 8, the phase shift detection circuit 210 has a condenser mounted on a circuit board and an exciting coil arranged facing each other along one circumferential direction of the rotor shield member, an exclusive OR gate 211 and an integration circuit 212. The exclusive OR gate 211 is configured to receive the reference pulse voltage P1 at the point a11 directly from the oscillating circuit 201 and a voltage at the point a12 which passes through the exciting coil. Then, the voltages at the points a11 and a12 are subjected to exclusive OR operation at the exclusive OR gate 211 to be output as a voltage at the point a13, which is then integrated at the integration circuit 212 to be output as an analog output signal at the point a14. Then, the analog output signal at the point a14 is amplified at an amplifier 213 to be output as an analog output signal at the point a15.

Likewise, the other phase shift detection circuit 220 has a condenser mounted on the circuit board and an exciting coil arranged facing each other along the other circumferential direction of the rotor shield member, an exclusive OR gate 221 and an integration circuit 222. The exclusive OR gate 221 is configured to receive the reference pulse voltage P1 at the point b11 directly from the oscillating circuit 201 and a voltage at the point b12 which passes through the exciting coil. Then, the voltages at the points b11 and b12 are subjected to exclusive OR operation at the exclusive OR gate 221 to be output as a voltage at the point b13, which is then integrated at the integration circuit 222 to be output as an analog output signal at the point b14. Then, the analog output signal at the point b14 is amplified at an amplifier 223 to be output as an analog output signal at the point b15.

Then, the two analog output signals a15 and b15 are added to an A/D converter 230, next sent to a calculating part 240 as DC detection voltages, which are digital signals, and finally become position detection signals A and B (not shown in Fig. 8) for sequentially detecting each angle position of the steering shaft S, which is described later.

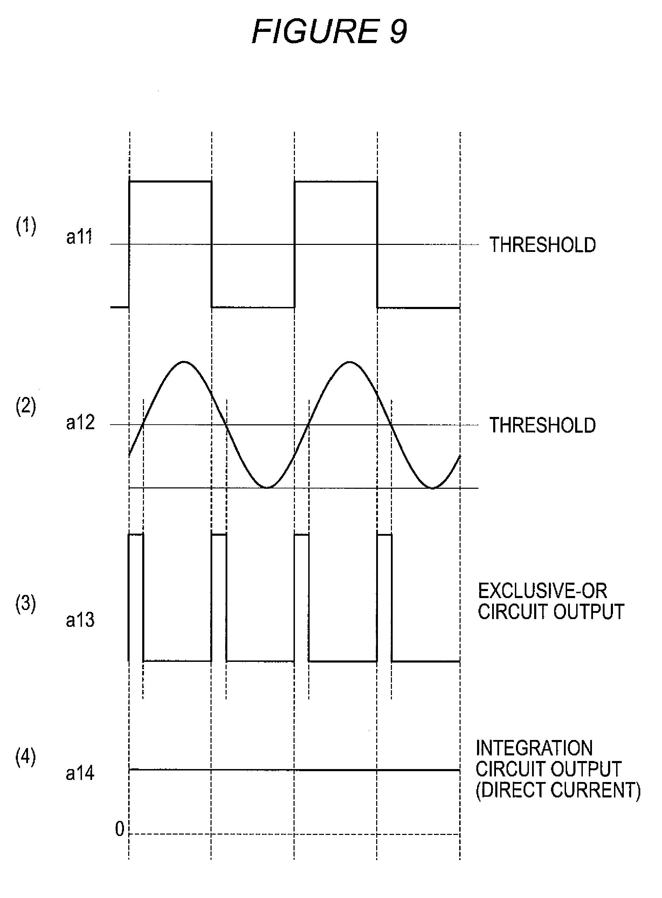

Here, Fig. 9 shows timing charts of output voltages of the phase shift detection circuit 210, in which (1) shows a timing chart of the output voltage at the point a11, and (2) shows a timing chart of the output voltage at the point a12, in which the horizontal axis at the center indicates a threshold for classifying the voltage at the point a12 into logical values of 0 and 1. (3) shows a timing chart of the output voltage at the point a13, and (4) shows a timing chart of the output voltage at the point a14.

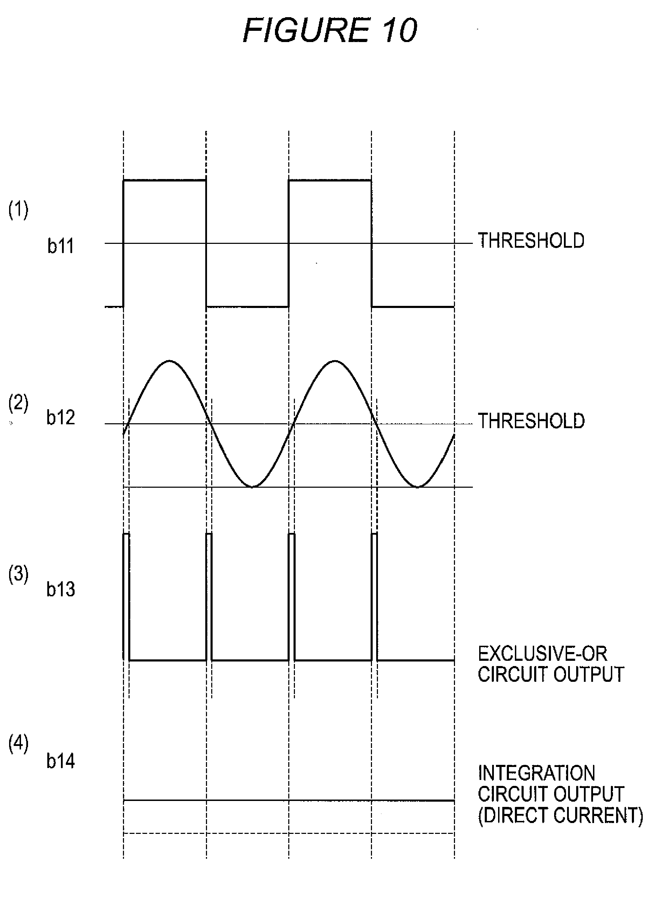

Likewise, Fig. 10 shows timing charts of output voltages of the phase shift detection circuit 220, in which (1) shows a timing chart of the output voltage at the point b11, and (2) shows a timing chart of the output voltage at the point b12, in which the horizontal axis at the center indicates a threshold for classifying the voltage at the point b12 into logical values of 0 and 1. (3) shows a timing chart of the output voltage at the point b13, and (4) shows a timing chart of the output voltage at the point b14.

However, when such a rotation angle detection apparatus is provided, on the circuit board thereof, with a condenser and also with an exclusive OR (EX-OR) gate, the detected rotation may have a large error due to temperature change and the number of components of the rotation angle detection apparatus is increased, which may cause a problem of increase in the cost of the circuit sensor itself. It is supposed that this problem arises because of use in the detection circuit of a condenser having temperature dependence due to temperature change around the rotation angle detection apparatus and variation of the initial characteristics and a logic IC which is the exclusive OR having temperature dependence of the input voltage.

Then, when such a rotation angle detection apparatus is mounted on a vehicle which has no choice but to be used under severe temperature change conditions, there arises an inevitably increasing error of detection output due to deviation of output characteristic of the condenser mounted thereon due to temperature change and variation in the initial characteristics of the condenser, whichmaymake it difficult to obtain output characteristics highly accurately in detection the rotation angle of the steering shaft S.

The present invention has an object to provide a rotation angle detection apparatus capable of detection a wide range of rotation angles accurately even under severe temperature change conditions irrespective of the structure made of a small number of components.

### Means for Solving the Problem

In order to solve the above-mentioned problems, a rotation angle detection apparatus according to the present invention is a rotation angle detection apparatus comprising: an angle detection unit having a detection circuit including a detection element part of a coil and a resistor and also having an inductance changing unit for changing an inductance of the coil in accordance with rotation of a rotation measurement target; a reference pulse voltage generating unit for causing the detection circuits to generate an output signal; and a calculating unit for calculating the output signal of the detection circuit, wherein when a reference pulse voltage generated by the reference pulse voltage generating unit is input to the detection circuit, there occurs a transient output voltage, and the calculating unit obtains an integral by integrating the transient output voltage for a predetermined time and then detects, based on the integral, a rotation angle of the rotation measurement target.

The rotation angle detection apparatus according to the present invention has no RLC circuit having combination of resistor, coil and condenser is not provided as a detection element part, but is structured to have an RL circuit having combination of a resistor and inductance as a detection element part of the detection circuit in the angle detectiondetecting unit. A reference pulse voltage generated at the reference pulse voltage generator is discharged via the coil of the detection circuit, this discharge waveform (transient waveform) is integrated by the calculating unit and change of the integral is used as information for detecting the rotation angle.

With this invention, it is possible to eliminate the need to use in the detection element part a condenser that may cause an error of output signal due to temperature characteristics or variation of initial characteristics, thereby reducing a rotation angle error due to temperature change around the rotation angle detection apparatus. Consequently, it is possible to detect a rotation angle stably and accurately even when the rotation angle detection apparatus is mounted on, for example, a vehicle under severe temperature change conditions.

In addition, as no condenser is used in the detection element part of the detection circuit, it is possible to reduce the number of components of the rotation angle detection apparatus and to reduce the error factors of the output signal of the detection circuit, thereby simplifying or dispensing with the logic circuit and/or amplifier and achieving cost cutting of the rotation angle detection apparatus.

### Brief Description of Drawings

Fig. 1 is a plan view showing an inside structure of a rotation angle detection apparatus according to an embodiment of the present invention, from which an upper cover is removed;
Fig. 2 is a circuitry block diagram of a rotation angle detection part of the rotation angle detection apparatus shown in Fig. 1;
Fig. 3 is a circuitry block diagram of another example of the rotation angle detection part of the rotation angle detection apparatus shown in Fig. 1;
Fig. 4 shows timing charts explaining how to perform the rotation angle detection processing in the rotation angle detection part of one coil member shown in Fig. 1;
Fig. 5 shows timing charts explaining how to perform the rotation angle detection processing in the rotation angle detection part of one coil member different from that shown in Fig. 4;
Fig. 6 is an output characteristics graph of outputs obtained in Figs. 4 and 5, in which the horizontal axis indicates rotation angles of a steering shaft and the vertical axis indicates outputs obtained from the rotation angle detection parts of the respective coils members depending on rotation angles;
Fig. 7 is an output characteristics graph of sawtooth shaped output characteristics obtained by performing signal processing on the output characteristics of Fig. 6, in which graph the horizontal axis indicates the rotation angles of the steering shaft and the vertical axis indicates the outputs obtained by the rotation angle detection parts;
Fig. 8 is a circuitry block diagram of the rotation angle detection unit in the conventional rotation angle detection apparatus;
Fig. 9 shows timing charts explaining how to perform the rotation angle detection processing in the rotation angle detectionunit of one coil member of the conventional rotation angle detection apparatus; and
Fig. 10 shows timing charts explaining how to perform the rotation angle detection processing in the rotation angle detection unit of one coil member different from that shown in Fig. 9.

### Best Modes for Carrying Out the Invention

With reference to the drawings, a rotation angle detection apparatus according to one embodiment of the present invention will now be described below. The rotation angle detection apparatus described here is that mounted on a steering shaft in a steering device of an automobile to detect a rotation angle of a steering wheel handle.

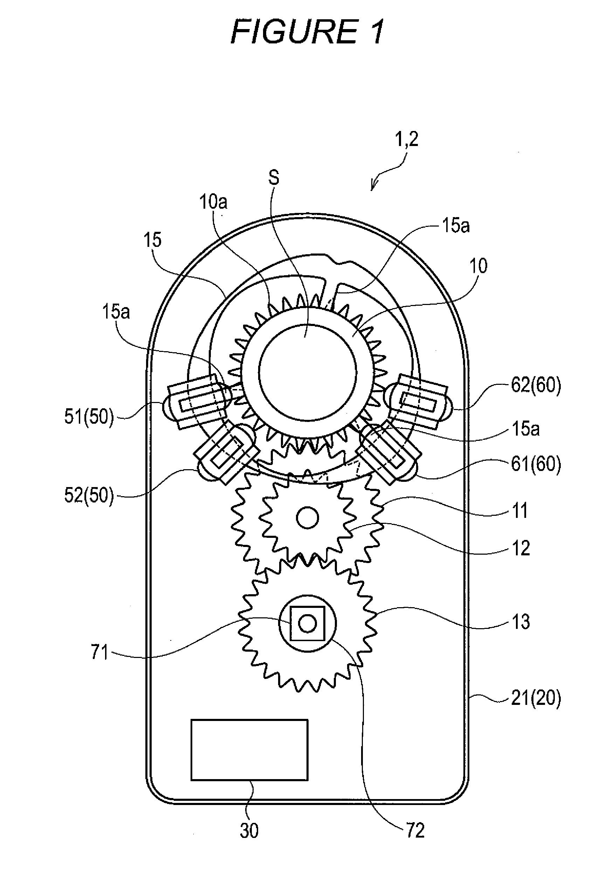

The rotation angle detection apparatus 1 according to the one embodiment of the present invention has, as shown in Fig. 1, a rotor 10 inserted on a steering shaft S as a rotation body to be measured (herein after referred to simply as "shaft S") and having on its outer periphery a toothed wheel 10a engaging with a first toothed wheel 11; a second toothed wheel 12 rotating coaxially and integrally with the first toothed wheel 11; a third toothed wheel engaging with the second toothed wheel, a lower case 21 supporting the rotor 10, the first toothed wheel 11, the second toothed wheel 12 and the third toothed wheel 13; an upper case (not shown) engaging with the lower case 21 to form a box-shaped case 20; and a rotation angle detection part 30 performing rotation angle detection of this invention.

The rotor 10 is made of synthetic resin having excellent strength and moldability. Around the rotor 10, for example, a plate-shaped rotor shield member 15 having a thickness of 0.5 mm is arranged. At inner-side predetermined positions of the rotor shield member 15, there are support parts 15a extending in the direction of the rotation axis, which is mounted onto the rotor 10. Or, the support parts 15a extend from peripheral predetermined positions of the rotor 10, and this support parts 15a are used to arrange the plate-shaped rotor shield member 15 in a shape of a ring around the rotor 10. The rotor shield member 15 is made of a conductive material such as brass, silver, aluminum, copper or the like. In this embodiment, the rotor shield member 15 has its width orderly varying from 2 mm to 5mm circumferentially.

The upper case and the lower case 21 are made of a shield material such as metal or insulating magnetic material having excellent strength and a shielding property of AC magnetic field. The upper case and the lower case 21 are in cooperation to form a box to accommodate the rotor 10, the rotor shield member 15, he first toothed wheel 11, the second toothed wheel 12 and the third toothed wheel 13. Besides, the lower case 21 has a connector (not shown) for supplying power to the rotation angle detection apparatus 1, transmitting a signal of the rotation angle detection apparatus 1 to the outside and the like.

Further, the upper case and the lower case 21 are provided with two paired coil member pairs 50, 60, as shown in Fig. 1. Out of the two paired coil member pairs 50, 60, the coil member pair 50 has coil members 51, 52 arranged circumferentially to form a predetermined angle in a plane vertical to the rotation axis. These coil members 51 and 52 are arranged facing each other with a predetermined distance away from each other in the plane vertical to the rotation axis of the roller shield material 15 of the rotor 10. Here, the rotor shield member 15 and the coil member pair 50 (51, 52) have positional relations that are almost the same as those shown in Figs. 14 and 16 of the above-mentioned patent document 1(Japanese Patent Laid-open Publication No. 2003-202240).

Here, the rotor shield member 15 and the coil members 51, 52 are in cooperation with each other to form first angle detection means. This rotor shield member 15 corresponds to inductance changing means for changing the inductance of the coil member pairs 50, 60 depending on rotation of the rotor 10 as a rotation body to be measured. Here, as describedabove, variation in width of the rotor shieldmember 15 circumferentially every 120 degrees increases change of detection signal from the coil member pair 50 corresponding to the actual rotation angle of the rotor 10.

The other coil member pair 60 also has paired coil members 61, 62 arranged to form a predetermined angle therebetween in the circumferential direction in a plane vertical to the rotational axis, and these coil members 61 and 62 are also mounted facing the rotor shield member 15 and spaced a predetermined distance away thereform relative to the plane vertical to the rotational axis of the rotor shield member 15 of the rotor 10. The rotor shield member 15 and the coil members 61, 62 act in cooperation to comprise the same means as the first angle detection means of the rotor shield member 15 and the coil members 51, 52. Thus, as the first angle detection means is provided, it is possible to form a redundant system of the angle detection means.

As shown in Fig. 1, each of the two coil member pairs 50 and 60 is mounted to form predetermined angles between its coil members in the circumferential direction of the rotor shield member 15 so that respective phase shift amount output values of the coil members are shifted 30 degrees from each other (at the positions where outputs of the above-mentioned inductance changing means become different from each other), which is described later. As shown in Fig. 1, each coil member of the coil member pairs 50 and 60 has its outer periphery taking the shape of a track for athletic sports shown in a plan view of Fig. 1.

The two coil member pairs, that is, one coil member pair 50 and the other coil member pair 60 are thus arranged because an output signal from the one coil member pair 50 and an output signal from the other coil member pair 60 are compared with each other to rapidly detect an anomaly of the rotation angle detection apparatus 1, or they are complementary to each other so as to cancel out the rotation angle undetectable area formed at the support parts 15a arranged at circumferential parts of the rotor shield member 15 when detecting the rotation angle.

In this embodiment, as described later, one period of the rotor shield member 15 is 120 degrees, while coil members 51, 52 of the one coil member pair 50 are arranged with their phases 30 degrees shifted from each other and coil members 61, 62 of the other coil member pair 60 are also arranged with their phases shifted from each other by a predetermined angle in the circumferential direction. Here, the one coil member pair 50 and the other coil member pair 60 are identical in basis structure, and therefore the following description about materials and structure treats the one coil member pair 50 (51, 52) only.

Each coil member of the coil member pair 50 has a core main body made of insulating soft magnetic material such as plastic magnet (for example, mixed soft magnetic material obtained by containing Mn-Zn soft magnetic ferrite in pps (poly phenylene sulfide) or the like) and an exciting coil held in the coil main body winding in a track-shaped inner groove formed along the outer peripheral portion of the core main body.

In addition, the exciting coils of the coil member pair 50 are arranged facing each other with the rotor shield member 15 interposed therebetween, they are connected in series and in the case, they are electrically connected to a conductive pattern of a print board on which the rotation angle detection part 30 is mounted. Then, as AC exciting current is made to pass through the opposed exciting coils, the AC magnetic field is generated around them and the AC magnetic field crosses the plane vertical to the rotation axis of the rotor shield member between the paired core main bodies.

Then, the AC magnetic field generated from the coil member pair 50 causes eddy current in the rotor shield member 15 of conductive material, however, this eddy current varies depending on changes in width of the rotor shield member 15 in accordance with the rotation of the rotor 10, which is used to detect variation in impedance thereby to detect the rotation angle of the rotor 10 at intervals of 120 degrees by the coil member pair 50.

Here, the coil members of the coil member pair 50 are arranged facing each other with the rotor shield member 15 interposed therebetween for the reason as follows. That is, when the position of the rotor 10 is shifted toward the axis direction if the shaft S by vibration or the like, outputs from the respective coil members of the coil member pair 50 are also changed with the rotor 10 shifted, however, the output from a coil member to one side of the rotor shield member 15 increases and the output from a coil member to the other side of the rotor shield member 15 decreased by such an increase amount. Accordingly, it becomes possible to cancel the output variation of the respective coil members of the coil member pair 50 by detecting the outputs from the opposed coil members.

First, when AC exciting current passes through each exciting coil of the coil members 51 and 52of the one coil member pair 50, there is formed AC magnetic field around each exciting coil of the coil members 51 and 52. At this time, the magnetic field crosses the rotor shield member 15, eddy current is induced on the surface of the rotor shield member 15 and the impedance of each exciting coil varies. Specifically, eddy current, which varies depending on the area of the rotor shield member 15 corresponding to the coil members 51 and 52 (projected area of the rotor shield member 15 to the coil members 51 and 52 seen in a direction perpendicular to the plane vertical to the rotation axis of the rotor shield member 15, or "projected area of the rotor shield member to the fixed core"), varies and detected as variation in current of the exciting coils passing through the coil member pair 50. This impedance variation corresponds to variation of eddy current induced on the surface of the rotor shield member 15.

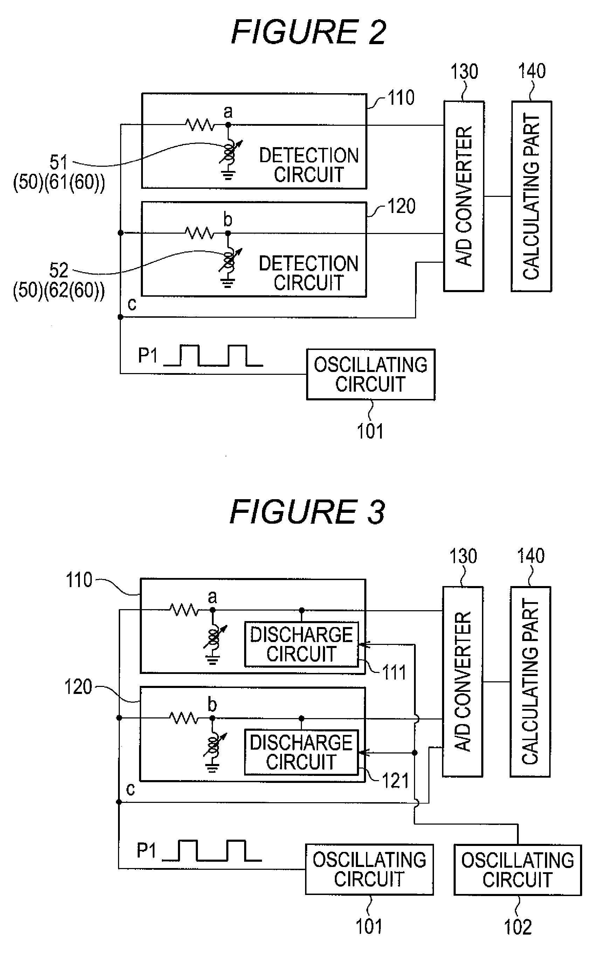

The rotation angle detection part of the rotation angle detection apparatus 1 partially has such a circuit as shown in the circuitry block diagram of Fig. 2 and is structured to detect a rotation angle based on a signal input to this circuit. Here, this embodiment only steering wheels handles a method of detection a rotation angle of the rotor 10, that is, the steering shaft S, based on combination of the rotor 10, the rotor shield member 15 and the coil member pair 50 (60) which are particularly likely to exert the effect of the present invention. And the method of detection the rotation angle of the third toothed wheel 13 based on combination of the third toothed wheel 13 and the MR element 72 is described in another embodiment.

The rotation angle detection part 30 includes a calculating part for performing processing on the outputs from the two detection circuits 110, 120. Besides, it includes an oscillating circuit 101 shown in the lower part of Fig. 2, which oscillating circuit 101 generates a rectangular reference pulse voltage. The reference pulse voltage generated by the oscillating circuit 101 is supplied to the two detection circuits 110 and 120.

One detection circuit 110 has an exciting coil of a coil member 51 (61) and a resistor. The voltage at the point a input and generated in the detection circuit 110 is converted by an A/D converter 130 to a digital signal.

Likewise, the other detection circuit 120 has an exciting coil of a coil member 52 (62) and a resistor. The reference pulse voltage is input to the detection circuit 120, which generates the voltage at the point b, which is converted by the A/D converter 130 to a digital signal. Then, two digital voltages are sequentially input to the calculating part 140 as signals for detecting rotation angle position information while the rotor 10 rotates.

Here, the rotation angle detection part 30 of the rotation angle detection apparatus 1 may partially have such a circuit as shown in the circuitry block diagram of Fig. 3. The circuitry block diagram of Fig. 3 is different from that of Fig. 2 in that the block diagram of Fig. 3 includes discharge circuits 111 and 121 for forcibly discharging outputs at the points a and b of the two detection circuits 110 and 120, respectively, tobeaGNDlevel. Thesedischarge circuits 111 and 121 operate by pulses from the oscillating circuit 102 however, the pulses from the oscillating circuit 102 are generated prior to or after the operation of the detection circuits 110 and 120 and are not generated during the operation of the detection circuits 110 and 120. In this structure, as the detection circuits 110 and 120 start to operate at the GND level based on the pulses from the oscillating circuit 101, the detection accuracy of the rotation angle can be increased effectively. Here, the discharge circuits 111 and 121 may be active devices such as FET.

In this embodiment, in the block diagram of the rotation angle detection apparatus 1 as shown in Figs. 2 and 3, there are features in the structure of the detection circuits 110 and 120. In other words, only a resistor and a coil are used as detection elements that comprise the detection element part, and no condenser is used that has dependence on the temperature change around the rotation angle detection apparatus and the variation in initial characteristics. Besides, the detection circuits 110 and 120 do not have logic IC made of EX-OR having temperature dependence in the input voltages.

This makes it possible to reduce the error factors in output signals of the detection circuits and to reduce the rotation angle error due to temperature change around the rotation angle detection apparatus.

Next description is made about a specific signal processing method in the rotation angle detection. The rotation angle detection method of this embodiment is so-called an integration-based position detection method, to which is applied the transient voltage change due to change in inductance of coils of the detection circuits. In this method, a transient voltage of the pulse P1 appearing in the exciting coils of the two coil members 51, 52 are integrated by the calculating part 140 of the micro computer thereby to calculate the position of the steering shaft S.

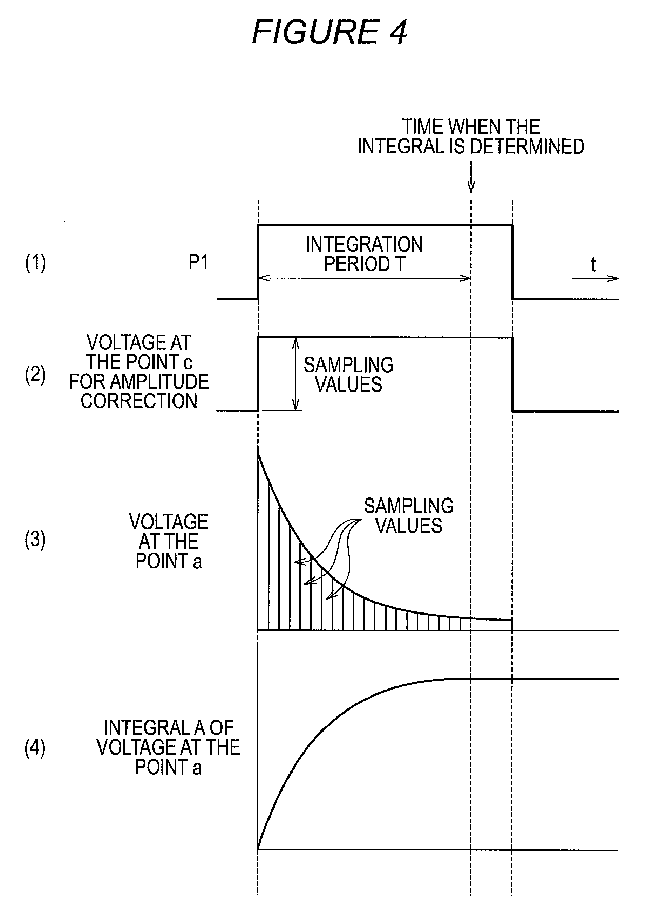

First, the rotation angle detection method is described of the rotation angle of the one detection circuit 110. In Fig. 4, a reference pulse voltage P1 is input from the oscillating circuit 101 (see timing chart (1)). In this case, actually, the voltage at the point c is monitored as shown in the timing chart (2), and when the signal is turned on, the signal at the point a is sampled at intervals of a predetermined time. Then, the voltage at the point a appearing after passing through one exciting coil of the coil member 51(61) is sampled at predetermined sampling intervals as shown in the timing chart (3) of Fig. 4 and converted at the A/D converter 130. The voltage at each rotation angle of the rotor 10 is inserted into the calculating part 140, and integrated only for a predetermined integration period T by the calculating part 140 as shown in the timing chart (4) of Fig. 4 to be output as an integral A. The integral A is used as a basis to perform the operation of the position of the steering by the calculating part 140 in the later-described method. Here, the leading edge of the waveform of timing chart (3) is synchronized with the leading edge of the waveform of timing chart (1), from which it is assumed that the effects of the detection element part of the detection circuit 110 made up of the resistor and coil (where condenser is eliminated) appear in the waveform of timing chart (3) of Fig. 4. Such effects of the improved waveform of the timing chart (3) of Fig. 4 are also shown in the integral A and the waveform of timing chart (4) of Fig. 4.

Next, the rotation angle detection method is also described of the rotation angle of the one detection circuit 120. Specifically, in Fig. 5, a reference pulse voltage P1 is input from the oscillating circuit 101 (see timing chart (1)). In this case, actually, the voltage at the point c is monitored as shown in the timing chart (2), and when the signal is turned on, the signal at the point b is sampled at intervals of a predetermined time. Then, the voltage at the point b appearing after passing through one exciting coil of the coil member 52(62) is sampled at predetermined sampling intervals as shown in the timing chart (3) of Fig. 5 and converted at the A/D converter 130. The voltage at a predetermined rotation angle of the rotor 10 is inserted into the calculating part 140, and integrated only for a predetermined integration period T by the calculating part 140 as shown in the timing chart (4) of Fig. 5 to be output as an integral B. The integral B is used as a basis to perform the operation of the position of the steering by the calculating part 140 in the later-described method. Here, like the detection circuit 110, the effects of the resistor and coil making up the detection element part of the detection circuit 120 appear in the waveform of timing chart.

Here, the voltage at the point c is sampled one or plural times during the integration time to obtain an amplitude of the reference pulse voltage P1 showing the voltage at the point c. Then, in order to cancel fluctuation of the amplitude of the reference pulse voltage P1, the above-described integrals A and B obtained based on the voltages at the points a and b are divided by the amplitude of the reference pulse voltage at the point c and corrected. Here, as the waveform of timing chart (3) of Fig. 4 and the waveform of timing chart (3) of Fig. 5 are improved waveforms, the above-mentioned integrals A and B and the respective corrected values include only small differences from respective ideal values. That is, the measurement error is reduced.

As seen from Figs. 4 and 5, as the areas of the rotor shield member 15 image-thrown to the coil members 51 and 52 are different in specific rotor rotation angles, the eddy current generated at the rotor shield member 15 is also different, thereby the impedances of the detection circuits 110 and 120 including the coil members 51 and 52 are different and further, the integrals A and B of the voltages at the points a and b become always different.

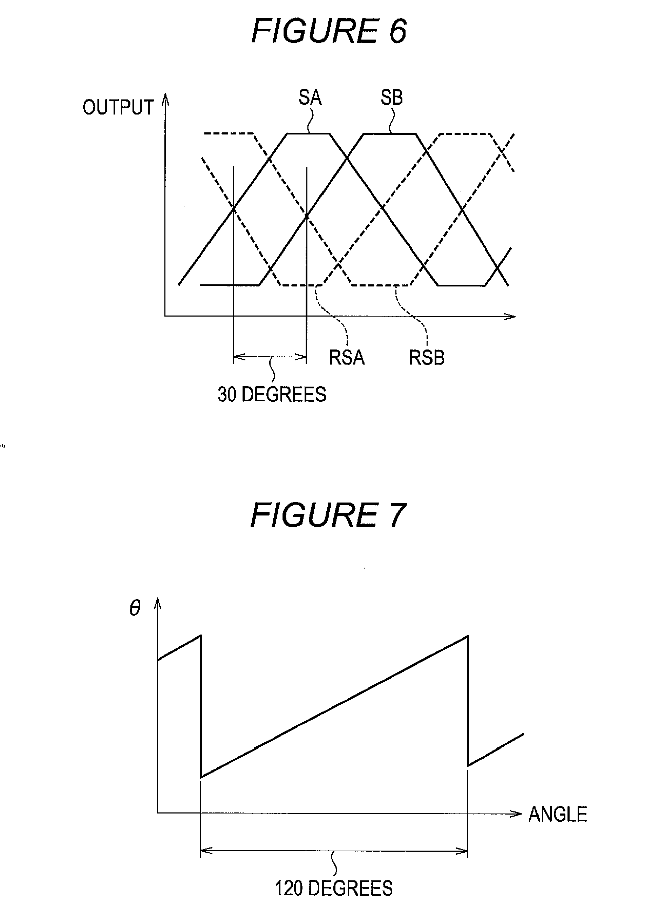

In this way, as the integrals A and B at specific angles of the rotor 10 are input to the calculating part 140 and sequentially stored in a memory of the calculating part 140 on a rotation angle basis of the rotor 10, an output SA and an output SB are obtained which are almost analogue to sin waveforms 30 degrees phase-shifted from each other as shown in Fig. 6 in which the horizontal axis indicates the rotation angles of the rotor, that is, steering shaft S. In other words, in this embodiment, the coil members of the coil member pair 50 and rotor shield member 15 are positioned circumferentially shifted in the case 20 in such a way that the phase of the a phase shift amount output signal obtained by cooperation of the coil member pair 50 and rotor shield member 15 is 30 degree shifted, the above-described signal processing is performed thereby to obtain output values of phase shift amount at intervals of 120 degrees 30 degrees shifted from each other like the phase shift amount output value SA of the one coil member 51 and the phase shift amount output value SB of the other coil member 52 as shown in Fig. 6.

The thus-obtained phase shift amount output values are used to detect the rotation angle of the rotor 10 at intervals of 120 degrees in the following way.

As shown in Fig. 5, the output values (SA, SB) of rotation angle of the rotor 10 obtained by the coil members of the coil member pair 50 and the output values (RSA, RSB) which are reverse to the output values (SA, SB) are convoluted at the calculating part 140. Then, the magnitude relation of the phase shift amount detected value is used to detect which range the rotation angle of the rotor 10 falls, 0 to 30 degrees, 30 to 60 degrees, 60 to 90 degrees or 90 to 120 degrees. Straight portions of these four phase shift detected values are used and these straight portions are subj ected to joint processing. Then, based on the detection result of the angle range among the above-mentioned four angle ranges, sawtooth shaped output signals varying at intervals of 120 degrees shown in Fig. 7 are used to detect the rotation angle of the rotor 10 at intervals of 12 0 degrees.

Meanwhile, as shown in Fig. 1, in the lower case 21, there are a magnet 71 provided at the center of the third toothed wheel 13 and rotating integrally with the third toothed wheel 13, and an MR element (magnetic flux detection element) 72 provided in the lower case 21 facing the magnet 71, for detecting a magnetic flux of the magnet 71. This magnet 71 and the MR element 72 work cooperatively to form the second detection means.

The MR element 72 is structured to output sine curve shaped detection outputs and cosine curve shaped detection outputs, and these outputs are converted to outputs of tangent function. As not shown here, these outputs are given as sawtooth shaped output signals that vary in the range of -112.5 degrees to +112.5 degrees, that is, at intervals of 225 degrees.

Here, this signal processing method is well known as disclosed in the Japanese Patent Laid-open publication No. 2004-53444, for example. The period of detected outputs of the MR element 72 is set to 225 degrees because, in this embodiment, the reduction gear ratio of the number of teeth of the outer periphery of the rotor 10, the number of teeth of the first toothed wheel 11 engaging with them, the number of teeth of the second toothed wheel 12 rotating coaxially and integrally with the first toothed wheel 1 and the number of teeth of the third toothed wheel 13 engaging the second toothed wheel 12 is detected in advance. Then, the ratio of these toothed wheels is used to detect 225 degrees as the period of the detection signal of the MR element 72 detected in accordance with rotation of the second toothed wheel 12.

In this way, in the rotation angle detection apparatus 1 of this embodiment, the coil member pair 50 and the rotor shield member 15 cooperate with each other as the first detection means, which outputs a first detected signal at intervals of 120 degrees in accordance with rotation of the rotor 10 (see Fig. 7), further, the magnet 71 and the MR element 72 cooperate with each other as the second detection means, which outputs a second detected signal at intervals of 225 degrees in accordance with rotation of the second toothed wheel 12. In other words, in this embodiment, when output signals of the coil member pair 50 increase (decrease) in accordance with rotation of the shaft S as the measurement target rotator, the output signals of the MR element 72 also increase (or decrease). Besides, in the rotation angle detection apparatus 1 of this invention, though the calculation algorithm is not explained in detail here, the absolute rotation angle is obtained within a measurable range of 0 to 1800 degrees, (-900 to +900 degrees) which is the least common of the periods of these detected signals.

Here, the fixed cores are not limited to the two fixed cores arranged in the circumferential direction of the rotor shield member as shown in this embodiment. For example, like the rotation angle detection apparatus disclosed in the Japanese Patent Laid-open Publication No. 2003-202240, three or more fixed cores may be arranged circumferentially around the rotor shield member to which the present invention is applicable. In this case, it is preferable to displace the phases of AC currents for energizing the exciting coils of each fixed core.

In addition, the fixed cores need not to be arranged as the paired fixed cores (not shown in details in this embodiment) facing with the rotor shield member of the rotor interposed therebetween as shown in the rotation angle detection apparatus according to the above-described embodiment. However, as the fixed cores are arranged facing each other with the rotor shield member of the rotor interposed therebetween, their output fluctuations due to vibration are canceled out thereby enabling vibration-proof detection of the rotation angle. In view of this, it is preferable that the fixed cores are arranged facing each other with the rotor shield member of the rotor interposed therebetween.

In addition, if there is no need to detect the wide-range rotation angles as in this embodiment, the rotor shield member of the rotation angle detection apparatus may be provided with only one pair of coil members. In this case, the detection circuits shown in Fig. 2 do not have to be prepared in two pairs but in one pair.

Further, if the support part of the rotor shield member is not made of a conductive material, there is no area where the rotation angle cannot be detected by the coil members (rotation angle undetectable area), and the coil members may be prepared in one pair and do not have to be prepared in two pairs.

As described above, in the rotation angle detection apparatus of this invention, no RLC circuit having combination of resistor, coil and condenser is not provided as a detection element part, but an RL circuit as detection element part having combination of a resistor and inductance is provided on the angle detection circuit, a reference pulse voltage generated at the reference pulse voltage generator is discharged at the detection circuit, this discharge waveform is integrated at the integration circuit and change of the integral is used as information for detecting the rotation angle.

his eliminates the need to use in the detection element part a condenser which may cause an error of an output signal due to its temperature dependence and initial characteristics variation, and makes it possible to decrease the rotation angle error due to temperature variation around the rotation angle detection apparatus. Consequently, for example, even when the rotation angle detection apparatus is arranged under severe temperature change conditions such as in vehicle or the like, it is possible to detect rotation angles stably and accurately.

Besides, as no condenser is used in the detection element part, the number of components of the rotation angle detection apparatus is reduced, and error of output signals of the detection circuit is reduced. This makes it possible to omit or simplify the logic circuit or the amplifier, thereby achieving cost cutting of the rotation angle detection apparatus.

Then, as the rotation angle detection apparatus of this embodiment has such a structure, it is possible to maintain high detection accuracy over a wide range of rotation angles while reducing the number of structural components.

Here, the rotation angle detection method according to the present invention has been described based on the rotation angle detection method of combined coil members, rotor shield member and rotor. However, this is not for limiting the present invention, and any combination of other structural elements suitable for rotation angle detection may be used as long as it exerts the effects of the present invention.

The rotation angle detection apparatus of the present invention is particularly appropriate to rotation angle detection of a vehicle steering device which is highly vulnerable to vibration. However, the rotation angle detection apparatus of the present invention is applicable to any device that needs a relative rotation angle or a rotation torque between rotational axes rotating while vibrating such as robot arms.

## Claims

1. A rotation angle detection apparatus comprising:
an angle detection unit having a detection circuit including a detection element part of a coil and a resistor and also having an inductance changing unit for changing an inductance of the coil in accordance with rotation of a rotation measurement target;
a reference pulse voltage generating unit for causing the detection circuits to generate an output signal; and
a calculating unit for calculating the output signal of the detection circuit, wherein
when a reference pulse voltage generated by the reference pulse voltage generating unit is input to the detection circuit, there occurs a transient output voltage, and the calculating unit obtains an integral by integrating the transient output voltage for a predetermined time and then detects, based on the integral, a rotation angle of the rotation measurement target.

2. The rotation angle detection apparatus according to claim 1, wherein the detection circuit comprises at least two detection circuits arranged at positions where outputs of corresponding inductance changing units are different from each other.

3. The rotation angle detection apparatus according to claim 1 or 2, wherein the calculating unit detects the rotation angle of the rotation measurement target based on a first detection signal from the detection circuit and a second detection signal output at intervals different from those of the signal from the detection circuit in accordance with the rotation measurement target.

4. A rotation angle detection method using a rotation angle detection apparatus having: an angle detection unit having a detection circuit including a detection element part of a coil and a resistor and also having an inductance changing unit for changing an inductance of the coil in accordance with rotation of a rotation measurement target; a reference pulse voltage generating unit for causing the detection circuits to generate an output signal; and a calculating unit for calculating the output signal of the detection circuit, comprising the steps of:
generating reference pulses;
sampling a signal based on the reference pulses generated by the detection circuit at intervals of a fixed time period which is shorter than a width of the reference pulse;
A/D converting a signal obtained by sampling;
integrating the signal obtained by the A/D converting for a predetermined time T to output an integral; and
calculating an angle position of the rotation measurement target based on the integral.
